# EUROPEAN PATENT APPLICATION

(11) **EP 3 248 464 A1**
(43) Date of publication of application: **29.11.2017**
(21) Application number: 15807682.8
(22) Date of filing: 10.11.2015
(51) Int. Cl.: A01N 1/02, B65D 81/38

(54) **USE OF POLYPROPYLENE GLYCOL TO MAINTAIN THE TEMPERATURE OF A PORTABLE CASE**

(30) Priority: 19.01.2015 ES 201530056
(71) Applicant: Instituto Bernabeu, S.L., 03016 Alicante (ES)
(72) Inventor: BERNABEU PEREZ, Rafael Francisco, E-03016 Alicante (ES)
(74) Representative: Isern-Jara, Nuria
(86) International application number: PCT/ES2015/070803
(87) International publication number: WO 2016/116639

(57) **Abstract**

Use of propylene glycol to maintain the temperature of a portable case for storing at least one intrauterine catheter for embryo transfer. A portable case (1) for at least one intrauterine catheter that comprises a base body that includes a support with a recessed region, which adopts a form complementary to the general form of the intrauterine catheter and a lid connected to said base body, the support thereof including a thermostable medium, which consists of propylene glycol.

## Description

### OBJECT OF THE INVENTION

The object of the present application is to register the use and a case provided for transporting a catheter used for embryo transfer that incorporates notable innovations and advantages.

### BACKGROUND OF THE INVENTION

Intrauterine catheters are devices generally formed by an elongated body used for transporting embryos from an incubator to the uterus of a woman, which is used for in vitro fertilization treatment.

In order to guarantee that the embryo arrives in suitable conditions prior to being introduced into the uterus, devices are used which allow the embryo to maintain a suitable temperature, given that it is an important factor during the embryo transfer with the aim of having the greatest possibilities of becoming pregnant in the fertility treatment.

However, the means used at present consist of voluminous and heavy devices, provided with an electric power system which maintains a predetermined temperature, such that although they maintain a temperature suitable for the envisage aim, they are heavy, during the transport thereof, for the person responsible for transporting the embryos from one point to another. In the English patent no. GB 2393242, a portable thermal container is described for transporting a catheter which includes heating means provided with a heating medium connected to an electric battery, such as a battery such that it has at least one of the drawbacks previously stated.

Furthermore, the applicant does not know of any invention at present, which provides all the characteristics which are described in this specification.

### DESCRIPTION OF THE INVENTION

The present invention has been developed with the aim of providing an invention, which is configured as a novelty within the field of application and resolves the drawbacks previously mentioned, also providing other additional advantages, which will be evident from the description, which is included below.

The use of propylene glycol (1,2 propanediol) provided to maintain the temperature of a portable case for storing at least one intrauterine catheter for embryo transfer is therefore an object of the present invention.

The propylene glycol is preferably in a gel state.

Another object of the present invention is also to provide a portable case for at least one intrauterine catheter which comprises a base body which includes a support with a recessed region which adopts a form complementary to the general form of the intrauterine catheter and a lid connected to said base body and is characterized by the fact that the support includes a thermostable medium which consists of propylene glycol.

In a particularly preferred embodiment of the invention, the support consists of an internally hollow body, in the interior of which is provided a predetermined volume of propylene glycol.

In one embodiment of the case, the base body is connected to the lid by means of a hinge.

Thanks to these characteristics, it is possible to maintain an embryo within a catheter with suitable temperature conditions, more specifically in a range between 36 and 37° C without the need to use any type of voluminous electric equipment, consequently the size and weight of the transport means for transporting can be reduced such that the transport thereof is made easier compared to the means available on the market at present.

Another aspect with no less importance is the fact that a case with the previously described characteristics does not require maintenance of electric equipment and occupies very little space during the storage thereof, prior to being used.

Other characteristics and advantages of the object of the present invention will be evident from the description of a preferred, but not exclusive, embodiment, which is illustrated in an exemplary and non-limiting manner in the drawings which are attached, in which:

### BRIEF DESCRIPTION OF THE DRAWINGS

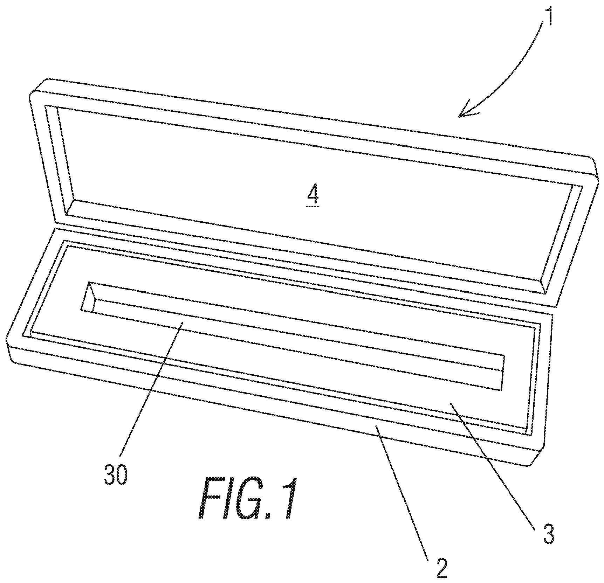

Figure 1 is a perspective view of an embodiment of a thermal case according to the present invention.

### DESCRIPTION OF A PREFERRED EMBODIMENT

In view of the mentioned figures and in accordance with the adopted numeration, a preferred exemplary embodiment of the invention can be seen in the figures, which comprises the parts and elements which are indicated and described in detail below.

As can be seen in the figures, a portable case is presented, indicated in a general manner with the reference (1), provided for storing an intrauterine catheter (not shown) which comprises a base body (2) in the form of a rectangular box which is made of any suitable material which has, in the interior thereof, a support (3) with a recessed region (30) which adopts a form complementary to the general form of the intrauterine catheter to be transported and a lid (4) connected to said base body by means of a hinge (5), although it will be evident to a person skilled in the art that another joining means can be used between the lid (4) and the base body (2) such as for example, a joining by press fit.

No great detail will be provided on the catheter to be placed in the interior of the case described, given that it does not form part of the object of the invention, being able to have any form or structure suitable for the transport of embryos.

The support is formed by an internally hollow body, in the interior of which a predetermined volume of propylene glycol is provided.

The details, the forms, the dimensions and other accessory elements, used in the manufacture of the case of the invention can be conveniently substituted for others, which do not depart from the scope defined by the claims, which are included below.

## Claims

1. A use of propylene glycol to maintain the temperature of a portable case for storing at least one intrauterine catheter for embryo transfer.

2. The use according to claim 1, **characterized by** the fact that the propylene glycol is in a gel state.

3. A portable case (1) for at least one intrauterine catheter, which comprises a base body (2), which includes a support (3) with a recessed region which adopts a form complementary to the general form of the intrauterine catheter and a lid (4) connected to said base body, **characterized by** the fact that the support includes a thermostable medium, which consists of propylene glycol.

4. The portable case (1) according to claim 3, **characterized by** the fact that the support (3) is formed by an internally hollow body, in the interior of which a predetermined volume of propylene glycol is provided.

5. The portable case (1) according to claim 3, **characterized by** the fact that the base body (2) is connected to the lid by means of a hinge.
